# EUROPÄISCHE PATENTSCHRIFT

(11) **EP 3 904 178 B1**
(45) Veröffentlichungstag und Bekanntmachung des Hinweises auf die Patenterteilung: **13.09.2023**
(21) Anmeldenummer: 20172406.9
(22) Anmeldetag: 30.04.2020
(51) Int. Cl.: B61L 15/00, G01S 19/42, G01S 19/09, G01S 19/50, B61L 25/02, G01S 19/11, G01S 19/14

(54) **SYSTEM UND VERFAHREN ZUR ÜBERWACHUNG EINES ZUGES**
METHOD AND SYSTEM FOR MONITORING A TRAIN
SYSTÈME ET PROCÉDÉ DE SURVEILLANCE D'UN TRAIN

(43) Veröffentlichungstag der Anmeldung: 03.11.2021
(73) Patentinhaber: GTS Deutschland GmbH, 71254 Ditzingen (DE)
(72) Erfinder: WALLNER, Christian, 71263 Weil der Stadt (DE)
(74) Vertreter: Kohler Schmid Möbus Patentanwälte

(56) Entgegenhaltungen:
- CA-A1- 2 334 771
- DE-A1-102018 203 346
- BROSHEARS E ET AL: "Ultra-Wideband Aided Carrier Phase Ambiguity Resolution in Real-Time Kinematic GPS Relative Positioning", GNSS 2013 - PROCEEDINGS OF THE 26TH INTERNATIONAL TECHNICAL MEETING OF THE SATELLITE DIVISION OF THE INSTITUTE OF NAVIGATION (ION GNSS+ 2013), THE INSTITUTE OF NAVIGATION, 8551 RIXLEW LANE SUITE 360 MANASSAS, VA 20109, USA, 20. September 2013 (2013-09-20), Seiten 1277-1284, XP056007469,

## Beschreibung

### Hintergrund der Erfindung

Die Erfindung betrifft ein System zur Überwachung eines Zuges nach Anspruch 1. Die Erfindung betrifft weiter ein Verfahren zur Überwachung eines Zuges nach Anspruch 8.

Ein solches System ist beispielsweise aus CN107336723 bekannt.

Für die Sicherheit in einem schienengebundenen Verkehrssystem mit Zügen werden die auf den Schienen verkehrenden Züge überwacht. Die Überwachung umfasst insbesondere die Erkennung der Vollständigkeit des Zuges, um zu vermeiden, dass einzelne oder mehrere Wagen des Zuges vom Rest des Zuges abgekoppelt werden und z. B. Gefahren auf der Strecke verursachen können. In CN107336723 wird ein System zur Vollständigkeitserkennung eines Zuges beschrieben, bei dem die Position eines ersten Zugendes über ein an dem ersten Zugende angeordnetes Satellitennavigationssystem ermittelt wird. Die Position eines zweiten Zugendes wir über ein an dem zweiten Zugende angeordnetes Satellitennavigationssystem ermittelt. Dabei werten beide Zugenden empfangenen Satellitendaten aus und ermitteln Positionsdaten, welche dann an das jeweils andere Zugende über drahtlose Kommunikation übermittelt werden. Dieses Verfahren erfordert einen hohen Hardwareeinsatz an beiden Zugenden.

DE102018203346A1 betrifft die Positionsbestimmung eines Fahrzeugs - insbesondere eines autonomen straßengebundenen Fahrzeugs - innerhalb eines globalen Navigationssatelliten-Systems (GNSS). Im Vordergrund steht eine GNSS- Auswerteeinheit für ein Fahrzeug, die über eine drahtlose Kommunikations- schnittstelle zu entsprechenden GNSS-Empfangseinheiten des Fahrzeugs sowie zu im Fahrzeugumfeld befindlicher Infrastruktur und Verkehrsteilnehmern verfügt. Die empfangenen GNSS-Informationen werden durch die Empfangseinheiten empfangen und über eine einheitliche Funkschnittstelle an eine zentrale Auswerteeinheit weitergeleitet. Eine besonders gute Positionsbestimmung wird durch Einsatz einer Vielzahl am Fahrzeug befindlicher GNSS-Empfangseinheiten erreicht.

CA2334771 A1 betrifft eine Vorrichtung und ein Verfahren zu Bestimmung der Gesamtlänge eines Zuges unter Verwendung eines globalen Positionsbestimmungs- Systems (GPS). Die Vorrichtung umfasst zwei Empfänger und eine Recheneinheit, wobei jeder Empfänger zur Bestimmung einer Position ausgebildet ist und die Recheneinheit eine Zuglänge auf Grundlage der bestimmten Positionen ermittelt. Die Datenübertragung zwischen den Empfängern und der Recheneinheit kann mittels eines Funk-Senders erfolgen.

Es ist Aufgabe der Erfindung, ein verbessertes System und ein verbessertes Verfahren zur Überwachung eines Zuges zur Verfügung zu stellen.

Diese Aufgabe wird gelöst durch ein System nach Anspruch 1 sowie ein Verfahren nach Anspruch 8.

Die abhängigen Ansprüche geben vorteilhafte Ausgestaltungen der Erfindung an.

Das System zur Überwachung eines Zuges weist eine erste Signaleinheit mit einer ersten Empfangseinheit an einem ersten Zugende und eine zweite Signaleinheit mit einer zweiten Empfangseinheit an einem zweiten Zugende auf. Die erste Empfangseinheit ist ausgebildet, erste Signaldaten von einem Ortungssystem auf zumindest einer ersten Frequenz zu empfangen. Bevorzugt empfängt die erste Empfangseinheit die ersten Signaldaten von dem Ortungssystem auf einer ersten Gruppe von ersten Frequenzen. Unter einer "Gruppe von Frequenzen" ist im Rahmen der Erfindung eine oder mehrere Frequenzen zu verstehen. Die zweite Empfangseinheit ist ausgebildet, zweite Signaldaten von dem Ortungssystem auf der zumindest einen ersten Frequenz zu empfangen. Bevorzugt empfängt die zweite Empfangseinheit die ersten Signaldaten von dem Ortungssystem auf einer zweiten Gruppe von ersten Frequenzen. Das System weist weiter eine Auswerteeinheit auf, die ausgebildet ist, aus den ersten Signaldaten Positionsdaten der ersten Empfangseinheit zu ermitteln.

Erfindungsgemäß weist die zweite Signaleinheit einen ersten Frequenzumsetzer auf, der ausgebildet ist, die zweiten Signaldaten auf zumindest eine zweite Frequenz umzusetzen und auf der zumindest zweiten Frequenz zu senden. Bevorzugt ist der erste Frequenzumsetzer ausgebildet, die zweiten Signaldaten von der zweiten Gruppe von ersten Frequenzen auf eine Gruppe von zweiten Frequenzen umzusetzen und die zweiten Signaldaten auf dieser Gruppe von zweiten Frequenzen zu senden.

Erfindungsgemäß ist die erste Empfangseinheit ausgebildet, die zweiten Signaldaten auf der zumindest einen zweiten Frequenz zu empfangen. Bevorzugt ist die erste Empfangseinheit ausgebildet, die zweiten Signaldaten auf der Gruppe von zweiten Frequenzen zu empfangen.

Erfindungsgemäß ist die Auswerteeinheit weiter dazu ausgebildet, aus den zweiten Signaldaten Positionsdaten der zweiten Empfangseinheit zu ermitteln. Die Auswerteeinheit erhält die benötigten Daten von der ersten Signaleinheit. Bevorzugt übermittelt die erste Signaleinheit dazu die zweiten Signaldaten an die Auswerteeinheit. Die Auswerteeinheit kann sich irgendwo im Zug befinden, bevorzugt jedoch an dem ersten Zugende. Bevorzugt ist das erste Zugende der Kopf des Zuges, wo sich z. B. die Lokomotive befindet. Es ist ebenfalls möglich, dass die Auswerteeinheit Bestandteil der ersten Signaleinheit ist.

Bevorzugt umfasst die zweite Signaleinheit am zweiten Zugende keine Auswerteeinheit. Sie ist bevorzugt also lediglich dazu eingerichtet, Signaldaten zu empfangen und umzusetzen.

Ein Beispiel eines Ortungssystems ist ein globales Satellitenortungssystem wie z. B. GPS, GLONASS, GALILEO, BEIDOU. Die Satelliten teilen dabei über Signaldaten ihre aktuelle Position und die genaue Uhrzeit mit. Signaldaten umfassen also Information bzgl. der Position des Satelliten und der Uhrzeit, zu der sich der Satellit an der entsprechenden Position befunden hat. Damit Positionsdaten bestimmt werden können, sollte eine Empfangseinheit die Signaldaten von z. B. mindestens drei Satelliten gleichzeitig empfangen. In der Auswerteeinheit werden aus den ersten Signaldaten der mindestens drei oder besser vier oder mehr Satelliten Signallaufzeiten ermittelt und daraus die aktuelle Position der ersten Empfangseinheit im Zug ermittelt. Die Signallaufzeit ist dabei die Laufzeit der ersten Signaldaten von den Satelliten zur ersten Empfangseinheit. Die erste Gruppe von ersten Frequenzen sind dabei diejenigen ersten Frequenzen, auf denen die Satelliten die ersten Signaldaten senden - bevorzugt pro Satellit eine andere erste Frequenz - und die von der ersten Empfangseinheit empfangen werden.

Damit Positionsdaten der zweiten Empfangseinheit bestimmt werden können, sollte die zweite Empfangseinheit die Signaldaten von z. B. mindestens drei Satelliten gleichzeitig empfangen. In der Auswerteeinheit werden aus den zweiten Signaldaten der mindestens drei oder besser vier oder mehr Satelliten Signallaufzeiten ermittelt und daraus die aktuelle Position der zweiten Empfangseinheit im Zug ermittelt. Die Signallaufzeit ist dabei die Laufzeit der zweiten Signaldaten von den Satelliten zur zweiten Empfangseinheit. Die zweite Gruppe von ersten Frequenzen sind dabei diejenigen ersten Frequenzen, auf denen die Satelliten die zweiten Signaldaten senden - bevorzugt pro Satellit eine andere erste Frequenz - und die von der zweiten Empfangseinheit empfangen werden. Die erste Gruppe von ersten Frequenzen und die zweite Gruppe von ersten Frequenzen können sich dabei überlappen, d. h. eine Schnittmenge an ersten Frequenzen haben. Dies bedeutet, dass es erste Frequenzen geben kann, die in der ersten Gruppe von ersten Frequenzen enthalten sind und zugleich in der zweiten Gruppe von ersten Frequenzen enthalten sind.

Die Empfangseinheiten können mit einer autonomen Energieversorgung ausgestattet sein. Als ein Ortungssystem ist auch z. B. ein Funkpeilsystem möglich.

Die mindestens eine erste und die mindestens eine zweite Frequenz unterscheiden sich voneinander. Bevorzugt ist die Gruppe von zweiten Frequenzen disjunkt zu der ersten Gruppe von ersten Frequenzen und disjunkt zu der zweiten Gruppe von ersten Frequenzen. D. h. dass es keine Frequenzen gibt, die sowohl zu den ersten als auch zu den zweiten Frequenzen gehören. In anderen Worten bedeutet dies, dass der erste Frequenzumsetzer die mindestens eine erste Frequenz, auf der die zweite Empfangseinheit die zweiten Signaldaten empfangen hat, auf die mindestens eine zweite Frequenz umsetzt, wobei die mindestens eine zweite Frequenz sich von den ersten Frequenzen unterscheidet, auf denen die zweiten Signaldaten oder die ersten Signaldaten empfangen werden. Die mindestens eine zweite Frequenz oder die Gruppe von zweiten Frequenzen unterscheiden sich also von den Frequenzen, die vom Ortungssystem verwendet werden. Dadurch kann die Auswerteinheit die ersten Signaldaten von den zweiten Signaldaten unterscheiden. Dies wiederum ermöglicht die Verarbeitung beider Signaldaten innerhalb derselben Auswerteeinheit, so dass lediglich eine Auswerteinheit im Zug vorgesehen sein muss. Auf diese Weise wird eine Einsparung von Hardware und eine höhere Kosteneffizienz erreicht.

Das Senden der zweiten Signaldaten auf der mindestens einen zweiten Frequenz erfolgt erfindungsgemäß analog. Dies bietet den Vorteil einer schnellen Übermittlung ohne zusätzliche Rechenzeiten zur Analog-Digital-Wandlung. Dies ermöglicht zugleich eine energieeffiziente und kosteneffiziente Realisierung.

Erfindungsgemäß weist die erste Signaleinheit einen zweiten Frequenzumsetzer auf. Der zweite Frequenzumsetzer ist ausgebildet, die zweiten Signaldaten von der zumindest einen zweiten Frequenz auf die zumindest eine erste Frequenz umzusetzen. Bevorzugt ist der Frequenzumsetzer ausgebildet, die zweiten Signaldaten von der Gruppe von zweiten Frequenzen auf eine Gruppe von ersten Frequenzen umzusetzen. Dies hat den Vorteil, dass die Verarbeitung der zweiten Signaldaten dann genauso erfolgen kann, wie die der ersten Signaldaten.

In einer Ausführungsform ist die zweite Signaleinheit ausgebildet, die zweiten Signaldaten auf zumindest eine dritte Frequenz umzusetzen und auf der zumindest einen dritten Frequenz zu senden. Bevorzugt ist die zweite Signaleinheit ausgebildet, die zweiten Signaldaten auf eine Gruppe von dritten Frequenzen umzusetzen. Die erste Empfangseinheit ist bevorzugt ausgebildet, die zweiten Signaldaten auf der Gruppe von dritten Frequenz zu empfangen. Die am zweiten Zugende empfangenen zweiten Signaldaten können so auf zwei verschiedenen Frequenzen oder zweit verschiedenen Frequenzgruppen an das erste Zugende gesendet werden. Dies erhöht die Ausfallsicherheit und Zuverlässigkeit des Systems.

Zur Umsetzung der zweiten Signaldaten auf die zumindest eine dritte Frequenz kann der erste Frequenzumsetzer oder ein dritter Frequenzumsetzer vorgesehen sein. Der dritte Frequenzumsetzer ist bevorzugt in der zweiten Signaleinheit angeordnet.

In einer Ausführungsform ist die Auswerteeinheit ausgebildet, zur Ermittlung der Positionsdaten der zweiten Empfangseinheit die zweiten Signaldaten heranzuziehen, die über die zumindest eine zweite Frequenz empfangen wurden, und/oder die zweiten Signaldaten heranzuziehen, die über die zumindest eine dritte Frequenz empfangen wurden. Hierdurch kann die Ausfallsicherheit und/oder die Zuverlässigkeit des Systems verbessert werden.

In einer Ausführungsform ist die Auswerteeinheit ausgebildet, aus den Positionsdaten der ersten Empfangseinheit am ersten Zugende und der zweiten Empfangseinheit am zweiten Zugende die Länge des Zuges zu bestimmen und/oder die Vollständigkeit des Zuges zu ermitteln. Die Längenbestimmung des Zuges und die Vollständigkeitsermittlung des Zuges sind wichtige Eigenschaften des Zuges, die es zur Sicherheit des Bahnverkehrs zu überwachen gilt. Bei der Längenbestimmung des Zuges wird die Länge des Zuges bestimmt, was z. B. wichtig ist, um festzustellen ob ein Gleisabschnitt schon frei ist oder noch von z. B. hinteren Wagen eines Zuges belegt ist.

In einer Ausführungsform sind in dem Zug weitere Signaleinheiten mit weitere Empfangseinheiten und weiteren Frequenzumsetzern angeordnet. Die weiteren Empfangseinheiten sind dazu eingerichtet, weitere Signaldaten von dem Ortungssystem auf der zumindest einen ersten Frequenz zu empfangen. Die weiteren Frequenzumsetzer sind dazu eingerichtet, die weiteren Signaldaten auf weitere Frequenzen umzusetzen und auf den weiteren Frequenzen zu senden. Dabei empfangen unterschiedliche Empfangseinheiten die weiteren Signaldaten auf der zumindest einen ersten Frequenz oder auf Gruppen von ersten Frequenzen. Die unterschiedlichen Frequenzumsetzer setzen die weiteren Signaldaten von der mindestens einen ersten Frequenz auf unterschiedliche weitere Frequenzen um. Bevorzugt setzen die unterschiedlichen Frequenzumsetzer die weiteren Signaldaten von der Gruppe von ersten Frequenzen auf Gruppen von unterschiedlichen weiteren Frequenzen um. Vorzugsweise sind die verschiedenen Signaleinheiten in verschiedenen Wagen des Zuges angeordnet. Hierdurch können Positionsdaten von weiteren Wagen ermittelt werden. Durch diese Maßnahmen lässt sich die Zuverlässigkeit des Systems und/oder die Genauigkeit des Systems weiter verbessern.

Bevorzugt ist die erste Empfangseinheit ausgebildet, die weiteren Signaldaten auf den weiteren Frequenzen zu empfangen. Bevorzugt ist die Auswerteeinheit ausgebildet, aus den weiteren Signaldaten Positionsdaten der weiteren Empfangseinheiten zu ermitteln. Bevorzugt werden die ermittelten Positionsdaten dann zur Zuglängenbestimmung und/oder Zugvollständigkeitserkennung eingesetzt.

In einer Ausführungsform weist die erste Empfangseinheit weitere Frequenzumsetzer auf, die ausgebildet sind, die weiteren Signaldaten von den weiteren Frequenzen auf die erste Frequenz umzusetzen. Bevorzugt werden die weiteren Signaldaten von Gruppen von weiteren Frequenzen auf Gruppen von ersten Frequenzen umgesetzt. Dabei können die ersten, zweiten, dritten und weiteren Frequenzumsetzer jeweils einzeln, paarweise oder zu mehreren in Frequenzumsetzermodulen zusammengefasst sein.

Ein Verfahren zur Überwachung eines Zuges weist die folgenden Schritte auf:
a. Empfangen von ersten Signaldaten von einem Ortungssystem auf zumindest einer ersten Frequenz durch eine erste Empfangseinheit einer ersten Signaleinheit an einem ersten Zugende;
b. Ermitteln von Positionsdaten der ersten Empfangseinheit aus den ersten Signaldaten in einer Auswerteeinheit des Zuges;
c. Empfangen von zweiten Signaldaten von einem Ortungssystem auf der zumindest einen ersten Frequenz durch eine zweite Empfangseinheit einer zweiten Signaleinheit am zweiten Zugende;
d. Ermitteln von Positionsdaten der zweiten Empfangseinheit aus den zweiten Signaldaten;

Erfindungsgemäß werden die zweiten Signaldaten durch einen ersten Frequenzumsetzer der zweiten Signaleinheit am zweiten Zugende auf zumindest eine zweite Frequenz umgesetzt und auf der zumindest einen zweiten Frequenz durch die zweite Signaleinheit am zweiten Zugende gesendet. Das Senden der zweiten Siqnaldaten auf der zumindest einen zweiten Frequenz erfolgt erfindungsgemäß analog. Die zweiten Signaldaten werden von der ersten Signaleinheit am ersten Zugende empfangen. Das Ermitteln der Positionsdaten der zweiten Empfangseinheit in Schritt d erfolgt mittels der Auswerteeinheit.

Es werden also frequenzverschobene Signaldaten zwischen den Zugenden übermittelt, aus denen in einem weiteren Schritt Positionsdaten ermittelt werden. Die Positionsdaten selbst werden also nicht zwischen den Signaleinheiten und den Zugenden übermittelt. Die Auswerteeinheit kann sich irgendwo im Zug befinden. Sie hat eine Datenverbindung mit der ersten Signaleinheit. Bevorzugt befindet sich die Auswerteinheit am ersten Zugende, weiter bevorzugt ist die Auswerteeinheit Bestandteil der ersten Signaleinheit.

Erfindungsgemäß werden die zweiten Signaldaten durch einen zweiten Frequenzumsetzer in der ersten Signaleinheit am ersten Zugende von der zumindest einen zweiten Frequenz auf die zumindest eine erste Frequenz umgesetzt. Danach kann die erste Signaleinheit die zweiten Signaldaten auf gleiche Weise wie die ersten Signaldaten empfangen.

Vorzugsweise wird das Verfahren durch ein zuvor beschriebenes System zur Überwachung eines Zuges durchgeführt.

In einer Ausführungsform werden die zweiten Signaldaten in der zweiten Signaleinheit am zweiten Zugende auf zumindest eine dritte Frequenz umgesetzt und auf der zumindest einen dritten Frequenz gesendet. Hierdurch ist es möglich, Redundanz zu schaffen, da die zweiten Signaldaten über die zumindest eine zweite Frequenz und die zumindest eine dritte Frequenz gesendet werden können. Bevorzugt werden die zweiten Signaldaten auf der zumindest einen zweiten Frequenz und auf der zumindest einen dritten Frequenz über voneinander unabhängige Sendeeinheiten gesendet. Hierdurch kann eine Unabhängigkeit der beiden redundanten Übertragungswege sichergestellt werden. Um die Sicherheit noch weiter zu erhöhen, werden in einer bevorzugten Variante die zweiten Signaldaten auf der zumindest einen zweiten Frequenz und auf der zumindest einen dritten Frequenz über voneinander unabhängige Empfangseinheiten in der ersten Signaleinheit empfangen.

In einer Ausführungsform werden zur Ermittlung der Positionsdaten der zweiten Empfangseinheit die zweiten Signaldaten herangezogen, die über die zumindest eine zweite Frequenz empfangen wurden und/oder die über die zumindest eine dritte Frequenz empfangen wurden. Beispielsweise können aus den beiden zweiten Signaldaten Positionsdaten der zweiten Empfangseinheit ermittelt werden und dann miteinander verglichen werden. Die Positionsdaten werden z. B. nur dann zur Überwachung des Zuges herangezogen, wenn sie übereinstimmen.

Durch die Verwendung der mindestens einen dritten Frequenz und/oder der unabhängigen Sender und/oder der unabhängigen Empfänger kann das Sicherheitsniveau erhöht werden und z. B. SIL4 erreicht werden.

In einer Ausführungsform werden die zweiten Signaldaten zusammen mit mindestens einem Zeitstempel gesendet. Dies ermöglicht die zeitliche Zuordnung auch bei Verzögerungen beim Senden und damit eine genauere Überwachung des Zuges. Der Zeitstempel kann z. B. ein von der zweiten Signaleinheit erzeugter Zeitstempel sein. Beispielsweise können es auch Zeitstempel sein, wie sie von dem Ortungssystem empfangen wurden.

In einer Ausführungsform werden für weitere Wagen des Zuges weitere Positionsdaten ermittelt. Hierfür sind in den weiteren Wagen weitere Empfangseinheiten angeordnet, die weitere Signaldaten auf der mindestens einen ersten Frequenz empfangen. Die weiteren Signaldaten werden von der mindestens einen ersten Frequenz auf weitere Frequenzen umgesetzt und auf den weiteren Frequenzen gesendet. Die weiteren Positionsdaten werden in der Auswerteeinheit ermittelt. In dieser Ausführungsform kann die Überwachung des Zuges unter Hinzuziehung der weiteren Positionsdaten noch genauer erfolgen. Eine Erkennung des Zugschlusses ist hierdurch noch präziser möglich, da die Position von mehreren Wagen des Zuges ermittelt werden kann und es so möglich werden kann, die Stelle einer Unterbrechung des Zugschlusses genauer zu ermitteln.

Die Überwachung des Zuges erfolgt insbesondere durch Überprüfung/Erkennung der Vollständigkeit des Zuges und/oder durch Bestimmung der Länge des Zuges. Für die Überprüfung/Erkennung der Vollständigkeit des Zuges und/oder die Bestimmung der Länge des Zuges werden die ersten Positionsdaten und die zweiten Positionsdaten herangezogen. Optional können auch die weiteren Positionsdaten hierfür herangezogen werden.

Weitere Vorteile der Erfindung ergeben sich aus der Beschreibung und der Zeichnung. Der Umfang der Erfindung ist in den beiliegenden Patentansprüchen festgelegt. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

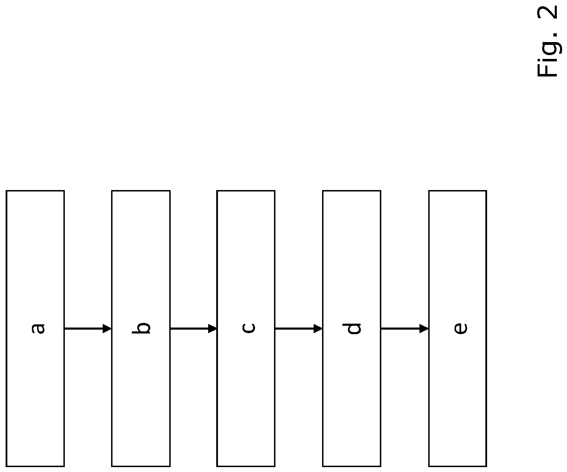

Das in Fig. 2 gezeigte Verfahren enthält nicht alle Merkmale von Anspruch 8 und ist daher nicht erfindungsgemäß.

Es zeigen:
- Fig. 1: eine schematische Darstellung eines Zuges mit einem erfindungsgemäßen System zur Überwachung;
- Fig. 2: schematisch ein Verfahren zur Überwachung des Zuges.

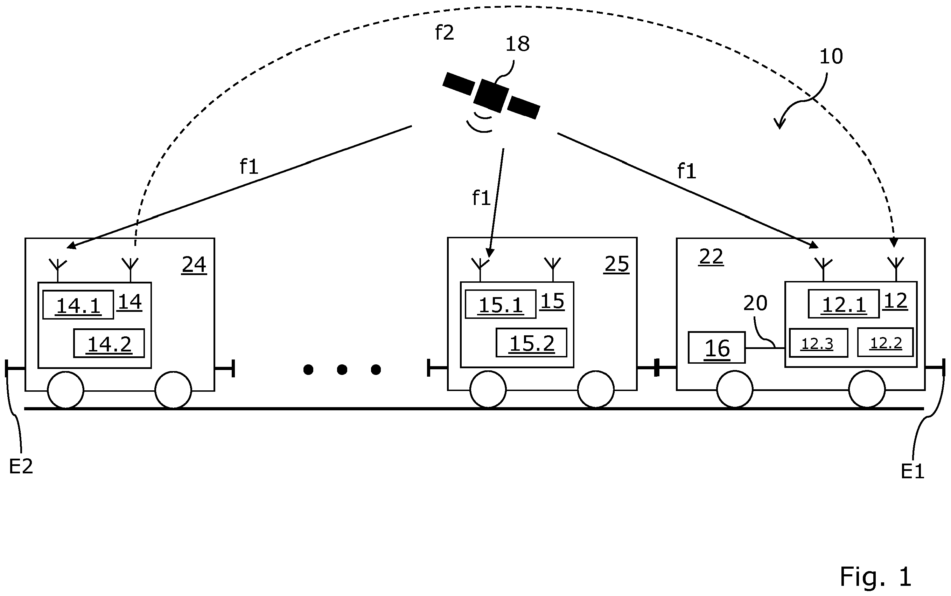

**Fig. 1** zeigt einen Zug **10** mit einem ersten Wagen **22** an einem ersten Zugende **E1** und einem zweiten Wagen **24** an einem zweiten Zugende **E2.** Das erste Zugende E1 kann beispielsweise der Kopf des Zuges 10 mit der Lokomotive sein. Zwischen erstem und zweitem Wagen 22, 24 können ein oder mehrere weitere Wagen (25) angeordnet sein.

Der erste Wagen 22 weist eine erste Signaleinheit **12** mit einer ersten Empfangseinheit **12.1** auf. Der zweite Wagen 24 weist eine zweite Signaleinheit **14** mit einer zweiten Empfangseinheit **14.1** auf. Die erste und die zweite Empfangseinheit 12.1, 14.1 sind dazu eingerichtet, Signaldaten auf einer Gruppe von ersten Frequenzen f1 von einem Satellitenortungssystem 18 zu empfangen.

Damit Positionsdaten bestimmt werden können, sollte eine Empfangseinheit die Signaldaten von z. B. mindestens drei Satelliten des Satellitenortungssystems 18 gleichzeitig empfangen. Der Empfang von den mindestens drei Satelliten erfolgt dabei über eine separate Frequenz pro Satellit. Für den Fall des Empfangs von drei Satelliten würden die ersten und zweiten Signaldaten also über jeweils drei erste Frequenzen f1 oder eine oder mehrere Dreiergruppe(n) von ersten Frequenzen f1 durch die erste und zweite Empfangseinheit 12.1, 14.1 empfangen. Für den Fall des Empfangs von vier Satelliten würden die ersten und zweiten Signaldaten also über jeweils vier erste Frequenzen f1 oder eine oder mehrere Vierergruppe(n) von ersten Frequenzen f1 durch die erste und zweite Empfangseinheit 12.1, 14.1 empfangen.

Die ersten Signaldaten werden von der ersten Empfangseinheit 12.1 der ersten Signaleinheit 14 von bevorzugt mindestens drei Satelliten auf einer ersten Gruppe von ersten Frequenzen f1 empfangen. Von der ersten Empfangseinheit der ersten Signaleinheit 12 werden die ersten Signaldaten bspw. über eine Datenleitung 20 an eine Auswerteinheit 16 übertragen. In der Auswerteeinheit 16 werden aus den ersten Signaldaten der mindestens drei oder besser vier oder mehr Satelliten Signallaufzeiten ermittelt und daraus die aktuelle Position der ersten Empfangseinheit 12.1 im Zug 10 ermittelt. Die Signallaufzeit ist dabei die Laufzeit der ersten Signaldaten von den Satelliten zur ersten Empfangseinheit 12.1.

Die zweiten Signaldaten werden von der zweiten Empfangseinheit 14.1 der zweiten Signaleinheit 14 von bevorzugt mindestens drei Satelliten auf einer zweiten Gruppe von ersten Frequenzen f1 empfangen. Daraufhin werden die zweiten Signaldaten in einem ersten Frequenzumsetzer **14.2** von der zweiten Gruppe von ersten Frequenzen f1 auf eine Gruppe von zweiten Frequenzen f2 frequenzverschoben. Dies erfolgt innerhalb der zweiten Signaleinheit 14. Die frequenzverschobenen zweiten Signaldaten werden anschließend auf der Gruppe von zweiten Frequenzen f2 gesendet (gestrichelter Pfeil). Von der ersten Empfangseinheit 12.1 werden die zweiten Signaldaten auf der Gruppe von zweiten Frequenzen f2 empfangen und von einem zweiten Frequenzumsetzer **12.2** wieder auf eine erste Frequenz f1 oder eine Gruppe von ersten Frequenzen f1 verschoben.

Von der ersten Empfangseinheit 12.1 der ersten Signaleinheit 12 werden die zweiten Signaldaten bspw. über die Datenleitung 20 an die Auswerteinheit 16 übertragen. In der Auswerteeinheit 16 werden aus den zweiten Signaldaten der mindestens drei oder besser vier oder mehr Satelliten Signallaufzeiten ermittelt und daraus die aktuelle Position der zweiten Empfangseinheit 14.1 im Zug 10 ermittelt. Die Signallaufzeit ist dabei die Laufzeit der zweiten Signaldaten von den Satelliten zur zweiten Empfangseinheit 14.1.

Optional weist der Zug 10 zumindest einen weiteren Wagen **25** auf, der bevorzugt eine weitere Signaleinheit **15** mit bevorzugt einer weiteren Empfangseinheit **15.1** und bevorzugt einem weiteren Frequenzumsetzer **15.2** aufweist.

Weitere Signaldaten werden von der weiteren Empfangseinheit 15.1 der weiteren Signaleinheit 15 von bevorzugt mindestens drei Satelliten auf einer weiteren Gruppe von ersten Frequenzen f1 empfangen. Daraufhin werden die weiteren Signaldaten in dem weiteren Frequenzumsetzer 15.2 von der weiteren Gruppe von ersten Frequenzen f1 auf eine weitere Frequenz oder eine Gruppe von weiteren Frequenzen (nicht dargestellt) frequenzverschoben und auf der weiteren Frequenz bzw. der Gruppe von weiteren Frequenzen gesendet. Von der ersten Empfangseinheit 12.1 werden die weiteren Signaldaten auf der weiteren Frequenz bzw. der Gruppe von weiteren Frequenzen empfangen und von einem zusätzlichen Frequenzumsetzer 12.3 auf die erste Frequenz f1 oder eine Gruppe von ersten Frequenzen f1 verschoben. Daraufhin werden die weiteren Signaldaten von der ersten Empfangseinheit 12.1 empfangen.

Von der ersten Empfangseinheit 12.1 der ersten Signaleinheit 12 werden die weiteren Signaldaten bspw. über die Datenleitung 20 an die Auswerteinheit 16 übertragen. In der Auswerteeinheit 16 werden aus den weiteren Signaldaten der mindestens drei oder besser vier oder mehr Satelliten Signallaufzeiten ermittelt und daraus die aktuelle Position der weiteren Empfangseinheit 15.1 im Zug 10 ermittelt. Die Signallaufzeit ist dabei die Laufzeit der weiteren Signaldaten von den Satelliten zur weiteren Empfangseinheit 15.1.

Das erfindungsgemäße System ist vorzugsweise dazu eingerichtet, dass in **Fig. 2** schematisch dargestellte Verfahren zum Überwachen des Zuges 10 auszuführen. Das in Fig. 2 skizzierte Verfahren umfasst die Verfahrensschritte a - e: In einem **Schritt a** werden die ersten Signaldaten von dem Satellitenortungssystem 18 auf der ersten Gruppe von ersten Frequenzen f1 durch eine erste Empfangseinheit 12.1 der ersten Signaleinheit 22 an dem ersten Zugende E1 empfangen. In einem **Schritt b** werden die Positionsdaten der ersten Empfangseinheit 12.1 aus den ersten Signaldaten in der Auswerteeinheit 16 des Zuges 10 ermittelt. In einem **Schritt c** werden zweite Signaldaten von einem Satellitenortungssystem auf einer zweiten Gruppe von ersten Frequenzen f1 durch die zweite Empfangseinheit 14.1 der zweiten Signaleinheit 24 am zweiten Zugende E2 empfangen. Die zweiten Signaldaten werden durch einen ersten Frequenzumsetzer 14.2 der zweiten Signaleinheit am zweiten Zugende E2 auf eine Gruppe von zweiten Frequenzen umgesetzt und auf der Gruppe von zweiten Frequenzen f2 durch die zweite Signaleinheit 24 am zweiten Zugende gesendet. Die zweiten Signaldaten werden von der ersten Signaleinheit am ersten Zugende E1 empfangen. In einem **Schritt d** werden Positionsdaten der zweiten Empfangseinheit 14.1 aus den zweiten Signaldaten durch die Auswerteeinheit 16 ermittelt. Aus den Positionsdaten der ersten und zweiten Signaleinheit 12, 14, die sich am ersten und zweiten Zugende E1, E2 befindet, wird in einem **Schritt e** die Vollständigkeit und/oder die Länge des Zuges ermittelt.

### Bezugszeichenliste

- 10: Zug
- 12: erste Signaleinheit
- 12.1: erste Empfangseinheit in erster Signaleinheit
- 12.2: zweiter Frequenzumsetzer in erster Signaleinheit
- 12.3: zusätzlicher Frequenzumsetzer in erster Signaleinheit
- 14: zweite Signaleinheit
- 14.1: zweite Empfangseinheit in zweiter Signaleinheit
- 14.2: erster Frequenzumsetzer in zweiter Signaleinheit
- 15: weitere Signaleinheit
- 15.1: weitere Empfangseinheit in weiterer Signaleinheit
- 15.2: weiterer Frequenzumsetzer in weiterer Signaleinheit
- 16: Auswerteeinheit
- 18: Ortungssystem
- 20: Datenleitung
- 22: erster Wagen
- 24: zweiter Wagen
- 25: weiterer Wagen
- E1: erstes Zugende
- E2: zweites Zugende
- f1: erste Frequenz (Frequenz bzw. Gruppe von Frequenzen, auf denen Signaldaten vom Ortungssystem gesendet werden)
- f2: zweite Frequenz (Frequenz bzw. Gruppe von Frequenzen, auf denen Signaldaten von der zweiten Signaleinheit zur ersten Signaleinheit gesendet werden)

## Patentansprüche

1. System zur Überwachung eines Zuges (10), wobei das System aufweist:
eine erste Signaleinheit (12) zur Anordnung an einem ersten Zugende (E1) des Zuges und eine zweite Signaleinheit (14) zur Anordnung an einem zweiten Zugende (E2) des Zuges,
wobei die erste Signaleinheit (12) eine erste Empfangseinheit (12.1) umfasst, die ausgebildet ist, erste Signaldaten von einem Ortungssystem (18) auf zumindest einer ersten Frequenz (f1) zu empfangen und
wobei das System weiter eine Auswerteeinheit (16) umfasst, die ausgebildet ist, aus den ersten Signaldaten Positionsdaten der ersten Empfangseinheit (12.1) zu ermitteln, und
wobei die zweite Signaleinheit (14) eine zweite Empfangseinheit (14.1) umfasst, die ausgebildet ist, zweite Signaldaten von einem Ortungssystem (18) auf der zumindest einen ersten Frequenz (f1) zu empfangen,
**dadurch gekennzeichnet,**
**dass** die zweite Signaleinheit (14) einen ersten Frequenzumsetzer (14.2) aufweist, der ausgebildet ist, die zweiten Signaldaten auf zumindest eine zweite Frequenz umzusetzen und analog auf der zumindest einen zweiten Frequenz zu senden, und
**dass** die erste Empfangseinheit (12.1) ausgebildet ist, die zweiten Signaldaten auf der zumindest einen zweiten Frequenz zu empfangen und die erste Signaleinheit (12) einen zweiten Frequenzumsetzer (12.2) aufweist, der ausgebildet ist, die zweiten Signaldaten von der zumindest einen zweiten Frequenz auf die zumindest eine erste Frequenz (f1) umzusetzen und die Auswerteeinheit (16) ausgebildet ist, aus den zweiten Signaldaten Positionsdaten der zweiten Empfangseinheit (14.1) zu ermitteln.

2. System nach Anspruch 1, **dadurch gekennzeichnet, dass** die zweite Signaleinheit (14) ausgebildet ist, die zweiten Signaldaten auf zumindest eine dritte Frequenz umzusetzen und auf der zumindest einen dritten Frequenz zu senden, wobei die erste Empfangseinheit (12.1) ausgebildet ist, die zweiten Signaldaten auf der zumindest einen dritten Frequenz zu empfangen.

3. System nach Anspruch 2, **dadurch gekennzeichnet, dass** die Auswerteeinheit (16) ausgebildet ist, zur Ermittlung der Positionsdaten der zweiten Empfangseinheit (14.1) die zweiten Signaldaten heranzuziehen, die über die zumindest eine zweite Frequenz empfangen wurden und/oder die zweiten Signaldaten heranzuziehen, die über die zumindest eine dritte Frequenz empfangen wurden.

4. System nach einem der vorhergehenden Ansprüche, **dadurch gekennzeichnet, dass** die Auswerteeinheit (16) ausgebildet ist, aus den Positionsdaten der ersten Empfangseinheit (12.1) am ersten Zugende (E1) und der zweiten Empfangseinheit (14.1) am zweiten Zugende (E2) die Länge des Zuges (10) zu bestimmen und/oder die Vollständigkeit des Zuges (10) zu ermitteln.

5. System nach einem der vorhergehenden Ansprüche, **dadurch gekennzeichnet, dass** in dem Zug (10) weitere Signaleinheiten (15) mit weitere Empfangseinheiten (15.1) und weiteren Frequenzumsetzern (15.2) angeordnet sind, wobei die weiteren Empfangseinheiten (15.1) dazu eingerichtet sind, weitere Signaldaten von dem Ortungssystem (18) auf der zumindest einen ersten Frequenz (f1) zu empfangen, und wobei die weiteren Frequenzumsetzer (15.2) dazu eingerichtet sind, die weiteren Signaldaten auf weitere Frequenzen umzusetzen und auf den weiteren Frequenzen zu senden.

6. System nach Anspruch 5, **dadurch gekennzeichnet, dass** die erste Empfangseinheit (12.1) ausgebildet ist, die weiteren Signaldaten auf den weiteren Frequenzen zu empfangen und die Auswerteeinheit (16) ausgebildet ist, aus den weiteren Signaldaten Positionsdaten der weiteren Empfangseinheiten (15.1) zu ermitteln

7. System nach Anspruch 6, **dadurch gekennzeichnet, dass** die erste Empfangseinheit (12.1) zusätzliche Frequenzumsetzer (12.3) aufweist, die ausgebildet sind, die weiteren Signaldaten von den weiteren Frequenzen auf die zumindest eine erste Frequenz (f1) umzusetzen.

8. Verfahren zur Überwachung eines Zuges (10) mit den Schritten,
a. Empfangen von ersten Signaldaten von einem Ortungssystem (18) auf zumindest einer ersten Frequenz (f1) durch eine erste Empfangseinheit (12.1) einer ersten Signaleinheit (12) an einem ersten Zugende (E1);
b. Ermitteln von Positionsdaten der ersten Empfangseinheit (12.1) aus den ersten Signaldaten in einer Auswerteeinheit (16) des Zuges;
c. Empfangen von zweiten Signaldaten von dem Ortungssystem (18) auf der zumindest einen ersten Frequenz (f1) durch eine zweite Empfangseinheit (14.1) einer zweiten Signaleinheit (14) am zweiten Zugende (E2);
d. Ermitteln von Positionsdaten der zweiten Empfangseinheit (14.1) aus den zweiten Signaldaten;
**dadurch gekennzeichnet,**
**dass** die zweiten Signaldaten durch einen ersten Frequenzumsetzer (14.2) der zweiten Signaleinheit (14) am zweiten Zugende (E2) auf zumindest eine zweite Frequenz umgesetzt werden;
**dass** die zweiten Signaldaten auf der zumindest einen zweiten Frequenz durch die zweite Signaleinheit (14) am zweiten Zugende (E2) analog gesendet und von der ersten Signaleinheit (12) am ersten Zugende (E1) empfangen werden;
**dass** die zweiten Signaldaten durch einen zweiten Frequenzumsetzer (12.2) in der ersten Signaleinheit (12) am ersten Zugende (E1) von der zumindest einen zweiten Frequenz auf die zumindest eine erste Frequenz (f1) umgesetzt werden; und
**dass** das Ermitteln der Positionsdaten der zweiten Empfangseinheit (14.1) in Schritt d mittels der Auswerteeinheit (16) erfolgt.

9. Verfahren nach Anspruch 8, **dadurch gekennzeichnet, dass** die zweiten Signaldaten in der zweiten Signaleinheit (14) am zweiten Zugende (E2) auf zumindest eine dritte Frequenz umgesetzt werden.

10. Verfahren nach Anspruch 9, **dadurch gekennzeichnet, dass** die zweiten Signaldaten auf der zumindest einen zweiten Frequenz und die zweiten Signaldaten auf der zumindest einen dritten Frequenz über zwei voneinander unabhängige Sendeeinheiten gesendet werden.

11. Verfahren nach Anspruch 9 oder 10, **dadurch gekennzeichnet, dass** die zweiten Signaldaten auf der zumindest einen zweiten Frequenz und die zweiten Signaldaten auf der zumindest einen dritten Frequenz durch voneinander unabhängige Empfangseinheiten der ersten Signaleinheit empfangen werden.

12. Verfahren nach einem der Ansprüche 9 bis 11, **dadurch gekennzeichnet, dass** zur Ermittlung der Positionsdaten der zweiten Empfangseinheit (14.1) sowohl die zweiten Signaldaten herangezogen werden, die auf der zumindest einen zweiten Frequenz empfangen wurden, als auch die zweiten Signaldaten herangezogen werden, die auf der zumindest einen dritten Frequenz empfangen wurden.

13. Verfahren nach einem der Ansprüche 8 bis 12, **dadurch gekennzeichnet, dass** die zweiten Signaldaten zusammen mit einem Zeitstempel gesendet werden.

14. Verfahren nach einem der Ansprüche 8 bis 13, **dadurch gekennzeichnet, dass** für weitere Wagen (25) des Zuges weitere Positionsdaten ermittelt werden, wobei in den weiteren Wagen weitere Empfangseinheiten (15.1) angeordnet sind, die weitere Signaldaten empfangen, die auf weitere Frequenzen umgesetzt und gesendet werden, wobei die weiteren Positionsdaten in der Auswerteeinheit (16) ermittelt werden.

15. Verfahren nach einem der Ansprüche 8 bis 14, **dadurch gekennzeichnet, dass** zur Überwachung des Zuges (10) mittels der ersten und zweiten Positionsdaten die Vollständigkeit des Zuges (10) erkannt wird und/oder die Länge des Zuges (10) bestimmt wird.

## Claims

1. System for monitoring a train (10), the system comprising:
a first signal unit (12) for arrangement at a first train end (E1) of the train and a second signal unit (14) for arrangement at a second train end (E2) of the train,
wherein the first signal unit (12) comprises a first receiving unit (12.1) which is designed to receive first signal data from a tracking system (18) on at least one first frequency (f1) and
wherein the system further comprises an evaluation unit (16) which is designed to determine position data of the first receiving unit (12.1) from the first signal data, and
wherein the second signal unit (14) comprises a second receiving unit (14.1) which is designed to receive second signal data from a tracking system (18) on the at least one first frequency (f1),
**characterized in that**
the second signal unit (14) has a first frequency converter (14.2) which is designed to convert the second signal data to at least one second frequency and to transmit said second signal data analog on the at least one second frequency, and **in that**
the first receiving unit (12.1) is designed to receive the second signal data on the at least one second frequency and the first signal unit (12) has a second frequency converter (12.2) which is designed to convert the second signal data from the at least one second frequency to the at least one first frequency (f1) and **in that** the evaluation unit (16) is designed to determine position data of the second receiving unit (14.1) from the second signal data.

2. System according to claim 1, **characterized in that** the second signal unit (14) is designed to convert the second signal data to at least one third frequency and to transmit said second signal data on the at least one third frequency, the first receiving unit (12.1) being designed to receive the second signal data on the at least one third frequency.

3. System according to claim 2, **characterized in that** the evaluation unit (16) is designed to use the second signal data received via the at least one second frequency and/or the second signal data received via the at least one third frequency to determine the position data of the second receiving unit (14.1).

4. System according to any of the preceding claims, **characterized in that** the evaluation unit (16) is designed to use position data of the first receiving unit (12.1) at the first end of the train (E1) and the second receiving unit (14.1) at the second end of the train (E2) to determine the length of the train (10) and/or to determine train integrity (10).

5. System according to any of the preceding claims, **characterized in that** further signal units (15) with further receiving units (15.1) and further frequency converters (15.2) are arranged in the train (10), wherein the further receiving units (15.1) are configured to receive further signal data from the tracking system (18) on the at least one first frequency (f1), and wherein the further frequency converters (15.2) are configured to convert the further signal data to further frequencies and to transmit said further signal data on said further frequencies.

6. System according to claim 5, **characterized in that** the first receiving unit (12.1) is designed to receive the further signal data on the further frequencies and **in that** the evaluation unit (16) is designed to determine position data of the further receiving units (15.1) from the further signal data.

7. System according to claim 6, **characterized in that** the first receiving unit (12.1) has additional frequency converters (12.3) which are designed to convert the further signal data from the further frequencies to the at least one first frequency (f1).

8. Method for monitoring a train (10) comprising the following steps:
a. Receiving the first signal data from a tracking system (18) on at least one first frequency (f1) by means of a first receiving unit (12.1) of a first signal unit (12) at a first end of the train (E1);
b. Determining the position data of the first receiving unit (12.1) from the first signal data in an evaluation unit (16) of the train;
c. Receiving the second signal data from the tracking system (18) on the at least one first frequency (f1) by means of a second receiving unit (14.1) of a second signal unit (14) at the second end of the train (E2);
d. Determining the position data of the second receiving unit (14.1) from the second signal data;
**characterized in that**
the second signal data are converted to at least one second frequency by a first frequency converter (14.2) of the second signal unit (14) at the second end of the train (E2);
the second signal data are transmitted analog on the at least one second frequency by the second signal unit (14) at the second end of the train (E2) and received by the first signal unit (12) at the first end of the train (E1);
the second signal data are converted from the at least one second frequency to the at least one first frequency (f1) by a second frequency converter (12.2) in the first signal unit (12) at the first end of the train (E1), and
the determination of the position data of the second receiving unit (14.1) takes place in step d by means of the evaluation unit (16).

9. Method according to claim 8, **characterized in that** second signal data are converted to at least one third frequency in the second signal unit (14) at the second end of the train (E2).

10. Method according to claim 9, **characterized in that** the second signal data are transmitted on the at least one second frequency and the second signal data are transmitted on the at least one third frequency via two mutually independent transmission units.

11. Method according to either claim 9 or claim 10, **characterized in that** the second signal data on the at least one second frequency and the second signal data on the at least one third frequency are received by mutually independent receiving units of the first signal unit.

12. Method according to any of claims 9 to 11, **characterized in that** both the second signal data received on the at least one second frequency and the second signal data received on the at least one third frequency are used to determine the position data of the second receiving unit (14.1).

13. Method according to any of claims 8 to 12, **characterized in that** the second signal data are transmitted together with a time stamp.

14. Method according to any of claims 8 to 13, **characterized in that** further position data are determined for further cars (25) of the train, wherein further receiving units (15.1) are arranged in the further cars, which receive further signal data which are converted to further frequencies and transmitted, wherein further position data are determined in the evaluation unit (16).

15. Method according to any of the claims 8 to 14, **characterized in that**, for the purpose of monitoring the train (10), train integrity (10) is determined and/or the length of the train (10) is determined by means of first and second position data.

## Revendications

1. Système permettant de surveiller un train (10), le système présentant : une première unité de signalisation (12) destinée à être disposée au niveau d'une première extrémité de train (E1) du train et une seconde unité de signalisation (14) destinée à être disposée au niveau d'une seconde extrémité de train (E2) du train,
la première unité de signalisation (12) comprenant une première unité de réception (12.1) qui est configurée pour recevoir, à au moins une première fréquence (f1), des premières données de signalisation provenant d'un système de localisation (18) et
le système comprenant en outre une unité d'évaluation (16) qui est configurée pour déterminer des données de position de la première unité de réception (12.1) à partir des premières données de signalisation, et
la seconde unité de signalisation (14) comprenant une seconde unité de réception (14.1) qui est configurée pour recevoir, à l'au moins une première fréquence (f1), des secondes données de signalisation provenant d'un système de localisation (18),
**caractérisé en ce**
**que** la seconde unité de signalisation (14) présente un premier convertisseur de fréquence (14.2) qui est configuré pour convertir les secondes données de signalisation à au moins une deuxième fréquence et pour les transmettre de manière analogique à l'au moins une deuxième fréquence, et
**que** la première unité de réception (12.1) est configurée pour recevoir les secondes données de signalisation à l'au moins une deuxième fréquence et la première unité de signalisation (12) présente un second convertisseur de fréquence (12.2) qui est configuré pour convertir les secondes données de signalisation de l'au moins une deuxième fréquence à l'au moins une première fréquence (f1) et l'unité d'évaluation (16) est configurée pour déterminer des données de position de la seconde unité de réception (14.1) à partir des secondes données de signalisation.

2. Système selon la revendication 1, **caractérisé en ce que** la seconde unité de signalisation (14) est configurée pour convertir les secondes données de signalisation à au moins une troisième fréquence et pour les transmettre à l'au moins une troisième fréquence, la première unité de réception (12.1) étant configurée pour recevoir les secondes données de signalisation à l'au moins une troisième fréquence.

3. Système selon la revendication 2, **caractérisé en ce que** l'unité d'évaluation (16) est configurée pour utiliser les secondes données de signalisation qui ont été reçues par l'intermédiaire de l'au moins une deuxième fréquence et/ou pour utiliser les secondes données de signalisation qui ont été reçues par l'intermédiaire de l'au moins une troisième fréquence pour la détermination des données de position de la seconde unité de réception (14.1).

4. Système selon l'une des revendications précédentes, **caractérisé en ce que** l'unité d'évaluation (16) est configurée pour définir la longueur du train (10) et/ou pour déterminer l'intégrité du train (10) à partir des données de position de la première unité de réception (12.1) au niveau de la première extrémité de train (E1) et de la seconde unité de réception (14.1) au niveau de la seconde extrémité de train (E2).

5. Système selon l'une des revendications précédentes, **caractérisé en ce que** d'autres unités de signalisation (15) comportant d'autres unités de réception (15.1) et d'autres convertisseurs de fréquence (15.2) sont disposées dans le train (10), les autres unités de réception (15.1) étant configurées pour recevoir d'autres données de signalisation provenant du système de localisation (18) à l'au moins une première fréquence (f1), et les autres convertisseurs de fréquence (15.2) étant configurés pour convertir les autres données de signalisation à d'autres fréquences et pour les transmettre aux autres fréquences.

6. Système selon la revendication 5, **caractérisé en ce que** la première unité de réception (12.1) est configurée pour recevoir les autres données de signalisation aux autres fréquences et l'unité d'évaluation (16) est configurée pour déterminer des données de position des autres unités de réception (15.1) à partir des autres données de signalisation

7. Système selon la revendication 6, **caractérisé en ce que** la première unité de réception (12.1) présente des convertisseurs de fréquence (12.3) supplémentaires qui sont configurés pour convertir les autres données de signalisation des autres fréquences à l'au moins une première fréquence (f1).

8. Procédé permettant de surveiller un train (10), comportant les étapes de
a. réception de premières données de signalisation provenant d'un système de localisation (18) à au moins une première fréquence (f1) par le biais d'une première unité de réception (12.1) d'une première unité de signalisation (12) au niveau d'une première extrémité de train (E1) ;
b. détermination de données de position de la première unité de réception (12.1) à partir des premières données de signalisation dans une unité d'évaluation (16) du train ;
c. réception de secondes données de signalisation provenant du système de localisation (18) à l'au moins une première fréquence (f1) par le biais d'une seconde unité de réception (14.1) d'une seconde unité de signalisation (14) au niveau de la seconde extrémité de train (E2) ;
d. détermination de données de position de la seconde unité de réception (14.1) à partir des secondes données de signalisation ;
**caractérisé en ce**
**que** les secondes données de signalisation sont converties à au moins une deuxième fréquence par le biais d'un premier convertisseur de fréquence (14.2) de la seconde unité de signalisation (14) au niveau de la seconde extrémité de train (E2) ;
**que** les secondes données de signalisation sont transmises de manière analogique à l'au moins une deuxième fréquence par le biais de la seconde unité de signalisation (14) au niveau de la seconde extrémité de train (E2) et sont reçues par la première unité de signalisation (12) au niveau de la première extrémité de train (E1);
**que** les secondes données de signalisation sont converties de l'au moins une deuxième fréquence à l'au moins une première fréquence (f1) par le biais d'un second convertisseur de fréquence (12.2) dans la première unité de signalisation (12) au niveau de la première extrémité de train (E1) ; et
**que** la détermination des données de position de la seconde unité de réception (14.1) est effectuée à l'étape d au moyen de l'unité d'évaluation (16).

9. Procédé selon la revendication 8, **caractérisé en ce que** les secondes données de signalisation sont converties à au moins une troisième fréquence dans la seconde unité de signalisation (14) au niveau de la seconde extrémité de train (E2).

10. Procédé selon la revendication 9, **caractérisé en ce que** les secondes données de signalisation sont transmises à l'au moins une deuxième fréquence et les secondes données de signalisation sont transmises à l'au moins une troisième fréquence par l'intermédiaire de deux unités de transmission indépendantes l'une de l'autre.

11. Procédé selon la revendication 9 ou 10, **caractérisé en ce que** les secondes données de signalisation sont reçues à l'au moins une deuxième fréquence et les secondes données de signalisation sont reçues à l'au moins une troisième fréquence par des unités de réception indépendantes l'une de l'autre de la première unité de signalisation.

12. Procédé selon l'une des revendications 9 à 11, **caractérisé en ce qu'à** la fois les secondes données de signalisation qui ont été reçues à l'au moins une deuxième fréquence et les secondes données de signalisation qui ont été reçues à l'au moins une troisième fréquence sont utilisées pour la détermination des données de position de la seconde unité de réception (14.1).

13. Procédé selon l'une des revendications 8 à 12, **caractérisé en ce que** les secondes données de signalisation sont transmises conjointement avec une estampille temporelle.

14. Procédé selon l'une des revendications 8 à 13, **caractérisé en ce que** d'autres données de position sont déterminées pour d'autres wagons (25) du train, d'autres unités de réception (15.1) étant disposées dans les autres wagons, lesquelles reçoivent d'autres données de signalisation qui sont converties et transmises à d'autres fréquences, les autres données de position étant déterminées dans l'unité d'évaluation (16).

15. Procédé selon l'une des revendications 8 à 14, **caractérisé en ce que,** pour la surveillance du train (10), l'intégrité du train (10) est détectée et/ou la longueur du train (10) est définie au moyen des premières et secondes données de position.
